# EUROPÄISCHE PATENTSCHRIFT

(11) **EP 0 909 708 B1**
(45) Veröffentlichungstag und Bekanntmachung des Hinweises auf die Patenterteilung: **24.05.2006**
(21) Anmeldenummer: 98117495.6
(22) Anmeldetag: 15.09.1998
(51) Int. Cl.: B65B 43/52, B65G 47/32

(54) **Behälterfüllmaschine**
Containers filling machine
Remplisseuse de récipients

(30) Priorität: 16.10.1997 DE 19745852
(43) Veröffentlichungstag der Anmeldung: 21.04.1999
(73) Patentinhaber: INDAG Gesellschaft für Industriebedarf mbH & Co. Betriebs KG, 69214 Eppelheim (DE)
(72) Erfinder: Kraft, Eberhard, 74924 Neckarbischofsheim (DE)
(74) Vertreter: Grünecker, Kinkeldey, Stockmair & Schwanhäusser Anwaltssozietät

(56) Entgegenhaltungen:
- EP-A- 0 073 867
- EP-A- 0 371 474
- EP-A- 0 711 719
- US-A- 3 941 233
- US-A- 3 961 569
- US-A- 5 423 414

## Beschreibung

Die Erfindung betrifft eine Füllmaschine für flexible Folienbeutel mit einer Transporteinrichtung, die eine Vielzahl von Transportelementen für Folienbeutel umfaßt, zur Zuführung der Folienbeutel zu einer Öffnungsstation, einer Füllstation, einer Verschließstation und einer Kühlstation entsprechend dem Oberbegriff des Anspruchs 1 und ein Verfahren zum Öffnen, Füllen, Verschließen und Kühlen von Folienbeuteln.

Um flexible Folienbeutel mehreren Behandlungsschritten, wie z.B. Ausbilden einer Beutelöffnung, Befüllen mit Füllgut, Versiegelung bzw. Verschließen und Kühlung zu unterziehen, ist es bekannt, die Folienbeutel mit Hilfe von Transportelementen an entsprechenden Behandlungsstationen vorbeizuführen.

Speziell in ungefüllten Zustand haben die Folienbeutel eine geringe Steifigkeit und müssen deswegen in geeigneter Position gehalten werden. Dazu müssen die Transportelemente entsprechende Haltevorrichtungen aufweisen. Außerdem müssen die Folienbeutel in der entsprechenden Behandlungsstation geöffnet werden, um mit Füllgut gefüllt zu werden bzw. im Anschluß daran wieder verschlossen werden. Dazu müssen die Transportelemente entsprechende Fornnungsteile aufweisen. Um alle diese erwähnten Aufgaben erfüllen zu können, benötigen bekannte Transportelemente daher mehr oder weniger aufwendige Konstruktionsteile mit entsprechenden Dimensionen.

In einer sogen. Reihentaktmaschine werden mehrere Beutel in quer zur Transportrichtung verlaufenden Reihen gleichzeitig behandelt. Dazu ist eine Transporteinrichtung vorgesehen, die die Folienbeutel in den entsprechenden Transportelementen an den Behandlungsstationen taktweise vorbeiführt Auf der Transporteinrichtung befinden sich im Betrieb mehrere Folienbeutel jeweils in einer Reihe quer zur der Bewegungsrichtung nebeneinander. Eine solche Reihe wird immer zum selben Zeitpunkt einem bestimmten Behandlungsschritt unterzogen. Die in Bewegungsrichtung darauffolgende Reihe von Folienbeuteln wird einem vorhergehenden Behandlungsschritt unterzogen. Der Abstand der einzelnen Transportelemente auf der Fördereinrichtung ist dementsprechend auf den Abstand der einzelnen Behandlungsstationen einerseits und den Dimensionen der Transportelemente andererseits abgestimmt.

Bei einer bekannten Füllmaschine werden die Transportelemente mit den darin befindlichen Folienbeuteln von einer Transporteinrichtung zunächst unter einer Öffnungsstation, einer Füllstation und einer Verschließstation entlanggeführt. Im weiteren Verlauf werden die Folienbeutel einer Kühlstation zugeführt, um die Folienbeutel nach der Füllung, z.B. mit hei-βem Füllgut, abzukühlen.

Damit eine ausreichende Kühlung erreicht werden kann, müssen sich die Folienbeutel eine ausreichende Zeit lang in der Kühlstation befinden. Dazu muß die Transporteinrichtung entweder langsam genug betrieben werden oder diskontinuierlich, was zu einer unerwünschten Reduktion des Gesamtdurchsatzes führt Werden die Folienbeutel der Kühlstation in den Transportelementen zugeführt, so bedingt dies eine große Anzahl derartiger Transportelemente. Da diese Transportelemente, wie beschrieben, einen komplizierten Aufbau mit entsprechenden Formungsteilen aufweisen, ist eine derartige Behälterfüllmaschine kostenintensiv.

Aus der EP 0711719 ist ein Verfahren und ein Förderband zum abstandsgleichen Fördern von Produkten bekannt. Aus der US 5,423,414 ist ein Verdampfungsbeutelkühler bekannt. Aus der US 3,941,233 ist eine Vorrichtung zum Transfer von Körpern mit einer empfindlichen Konsistenz von einem Zuförderer zu einem Abförderer bekannt.

Aufgabe der vorliegenden Erfindung ist es, eine Füllmaschine für flexible Folienbeutel zur Verfügung zu stellen, die trotz hoher Leistung einfacher und damit kostengünstiger insbesondere in der Herstellung ist.

Diese Aufgabe wird bei einer gattungsgemäßen Füllmaschine für Folienbeutel mit den Merkmalen des kennzeichnenden Teils des Anspruchs 1 und durch ein Verfahren mit den Merkmalen des Anspruchs 8 gelöst. Vorteilhafte Ausgestaltungen sind Gegenstand der Unteransprüche.

Bei einer erfindungsgemäßen Füllmaschine umfaßt die Transporteinrichtung eine erste Fördereinrichtung mit einer Vielzahl von ersten Transportelementen zur Zuführung von Folienbeuteln zur Öffnungsstation, der Füllstation und der Verschließstation, und eine zweite Fördereinrichtung mit einer Vielzahl von zweiten Transportelementen zur Zuführung der Folienbeutel zur Kühlstation, und eine Übergabestation zur Übergabe der Folienbeutel von der ersten Fördereinrichtung zur zweiten Fördereinrichtung.

Mit Hilfe zweier unabhängiger Fördereinrichtungen ist es möglich, die Geschwindigkeit bzw. den Takt, mit der die Folienbeutel an den entsprechenden Behandlungsstationen bzw. der Kühlstation vorbeigeführt werden, individuell zu regeln. Ein schneller Arbeitstakt, der z.B. bei der Öffnungs-, Füll- und der Verschließstation möglich ist, bedingt nicht notwendigerweise einen schnellen Arbeitstakt bzw. eine hohe Geschwindigkeit, wenn die Folienbeutel die Kühlstation passieren. Zudem können die zweiten Transportelemente der zweiten Fördereinrichtung einfacher gestaltet sein, da in der Kühlstation keine Öffnungs- bzw. Schließfunktionen mehr durchgeführt werden müssen. Die Folienbeutel sind in der Kühlstation bereits gefüllt, so daß sie auch eine ausreichende Eigenstabilität haben und keine aufwendigen Haltevorrichtungen in den Transportelementen vorgesehen sein müssen. Auf diese Weise ergibt sich die Möglichkeit, die zweiten Transportelemente, die die Folienbeutel der Kühlstation zuführen, einfacher zu gestalten, so daß die Anzahl der notwendigen, komplizierter aufgebauten Transportelemente erheblich verringert werden kann.

Vorteilhafterweise wird die zweite Fördereinrichtung mit einer kleineren Geschwindigkeit betrieben als die erste Fördereinrichtung. Eine kleinere Geschwindigkeit der zweiten Fördereinrichtung bedeutet eine längere Aufenthaltsdauer der Folienbeutel im Bereich der Kühlstation; was die Kühleffektivität erhöht

In weiterer vorteilhafter Ausgestaltung weisen die zweiten Transportelemente der zweiten Fördereinrichtung einen kleineren Abstand in Förderrichtung zueinander auf als die ersten Transportelemente in der ersten Fördereinrichtung. Wenn die zweite Fördereinrichtung mit langsamerer Geschwindigkeit betrieben wird als die erste Fördereinrichtung, so kann durch eine kleinere Beabstandung gewährleistet werden, daß die mit einem schnelleren Takt von der ersten Fördereinrichtung zugeführten Folienbeutel von der zweiten Fördereinrichtung trotz der geringeren Geschwindigkeit wegbefördert werden. Auf diese Art und Weise kann die Maschine mit einer sehr hohen Leistung betrieben werden, die im wesentlichen durch den Arbeitstakt der ersten Fördereinrichtung bestimmt wird. Im Kühlbereich entsteht dann keine den Durchsatz vermindernde Engstelle.

In vorteilhafter Ausgestaltung ist die Arbeitshöhe der Öffnungsstation, der Füllstation und der Verschließstation einstellbar, um die Vorrichtung auf verschieden hohe Folienbeutel einrichten zu können.

In einer besonders vorteilhaften Ausführungsform umfaßt die Füllmaschine eine Plattform im Übergangsbereich zwischen der ersten und der zweiten Fördereinrichtung. Eine solche Plattform ermöglicht eine leichte Wartung bzw. Überwachung der einzelnen Behandlungsstationen bzw. -operationen.

In einer Ausführungsform umfaßt die Übergabestation höhenveränderliche und laterial verschiebbare Elemente, die Klammem haltern, mit deren Hilfe die Folienbeutel von der ersten Fördereinrichtung zur zweiten Fördereinrichtung befördert werden. Vorteilhafterweise ist dazu eine automatische Steuerung vorgesehen.

Im folgenden wird anhand der Figuren eine Ausführungsform einer erfindungsgemä-βen Füllmaschine und deren Funktionsweise beschrieben.

Dabei zeigt
- Figur 1: eine schematische Seitenansicht einer erfindungsgemäßen Füllmaschine und
- Figur 2: eine schematische Seitenansicht des Übergabebereiches einer erfindungsgemäßen Füllmaschine.

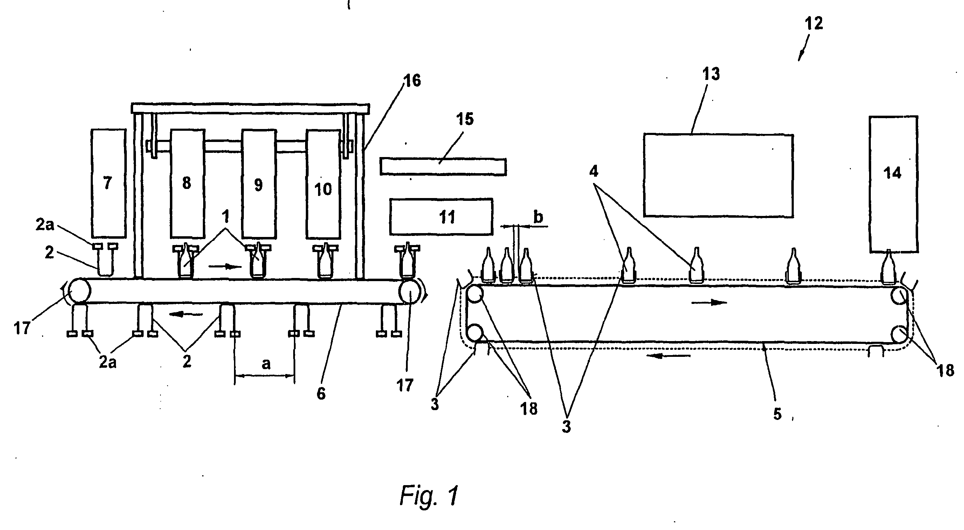

Die beschriebene Ausführungsform umfaßt ein Beutelmagazin 7, eine Öffnungsstation 8, eine Füllstation 9 und eine Verschließstation 10, die oberhalb der ersten Fördereinrichtung 6 angeordnet sind. Die Fördereinrichtung 6 dient dazu, Reihen von Follenbeutein 1 diesen Behandlungsstationen zuzuführen. Da es sich bei der Figur 1 um eine Seitenansicht handelt, ist jeweils nur der erste Folienbeutel einer Reihe zu sehen. Die einzelnen Behandlungsstationen erstrecken sich dabei jeweils über die ganze Reihe von Folienbeutein.

Die an sich bekannten Folienbeutel 1 bestehen z.B. aus Aluminiumlaminatfolie. Zwei Folien sind an drei Seiten miteinander verschweißt, während an der vierten Seite ein Bodenteil eingesetzt ist Auf diese Weise erweitert sich der Folienbeutel nach unten zu einer Stndfläche. Im ungefüllten Zustand ist die Oberkante des Beutels 1 noch unverschweißt.

Auf der Fördereinrichtung 6 befinden sich Transportelemente 2 mit einem Abstand a in Förderrichtung zueinander. Die einzelnen Transportelemente umfassen an sich bekannte Formteile 2a, die zum Halten der Folienbeutel in aufrechter Position dienen bzw. den Öffnungs- und Verschließvorgang unterstützen. Die Fördereinrichtung 6 mit den Transportelementen 2 läuft um Umlenkrollen 17 und bildet auf diese Weise ein Endlosband.

Die Öffnungsstation 8, die Füllstation 9 und die Verschließstation 10 sind an einem Gestell 16 befestigt, das höhenverstellbar ist. Im Anschluß an die Verschließstation 10 schließt sich eine Übergabestation 11 an, die die verschlossenen Folienbeutel an eine zweite Fördereinrichtung 5 weitergibt Diese zweite Fördereinrichtung 5 führt durch eine Kühlstation 12, die z.B. durch eine Ventilationskühlung gebildet wird. Es können jedoch auch andere Kühlmechanismen, wie z.B. entsprechende Kältezonen oder eine Wasserkühlung 13 vorgesehen sein. Figur 1 zeigt z.B. schematisch eine Ventilationskühlung 13.

An der zweiten Fördereinrichtung 5 sind Transportelemente 3 befestigt, die einen Abstand b untereinander in Förderrichtung haben, der kleiner ist als der Abstand a der Transportelemente 2 auf der ersten Fördereinrichtung 6. Die zweite Fördereinrichtung 5 ist ein Endlosband, das um die Umlenkrollen 18 zurückgeführt wird. Im Anschluß an die Kühlstation 12 schließt sich eine Entnahmevorrichtung 14 an.

Sowohl die ersten als auch die zweiten Transportelemente (2, 3) sind jeweils in Reihen nebeneinander angeordnet, von denen in der Seitenansicht der Figur 1 nur das jeweils erste sichtbar ist. Die Folienbeutel, die in einer solchen Reihe von Transportelementen nebeneinander durch die Behandlungsstationen geführt werden, werden den jeweiligen Behandlungsstationen gleichzeitig unterzogen. Die Figuren zeigen der Übersichtlichkeit halber nicht alle Transportelemente, die nacheinander den Behandlungsstationen zugeführt werden. Nicht gezeigte Transportelemente sind z.B.- bei der zweiten Fördereinrichtung durch eine Strichlinie gekennzeichnet

Im Übergabebereich zwischen der ersten und der zweiten Fördereinrichtung befindet sich oberhalb der Übergabevorrichtung 11 eine Wartungs- und Überwachungsplattform 15.

Die Bewegungsrichtungen sowohl der ersten Fördereinrichtung 6 als auch der zweiten Fördereinrichtung 5 sind durch Pfeile angeordnet.

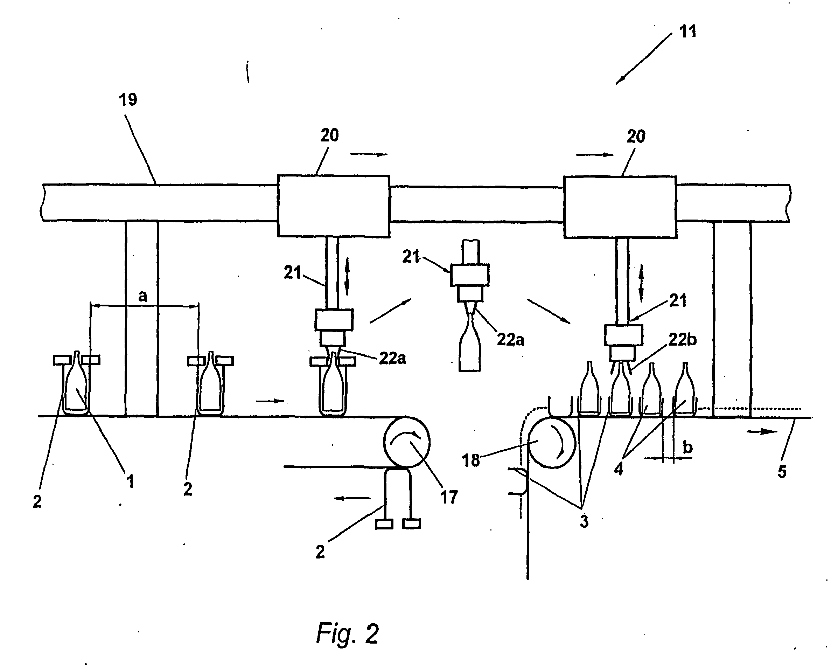

Figur 2 zeigt in schematischer Darstellung einen detaillierten Ausschnitt aus Figur 1 mit der Übergabestation 11.

An einem Träger 19 befinden sich horizontal bewegliche Trageelemente 20. An diesen Trageelementen 20 sind höhenveränderliche Elemente 21 befestigt, an deren unterem Ende sich Klammem 22a, 22b anschließen, die zur Aufnahme der Folienbeutel 1, 4 dienen. Diese höhenverstellbaren Elemente 21 sind z.B. Pneumaükzylinder oder drehbare Spindeln mit ensprechenden Gewindegegenstücken. Es sind jedoch auch andere Realisierungen möglich. Die weiteren Elemente entsprechen den mit Bezug zu Figur 1 beschriebenen Elementen und sind mit den gleichen Bezugsziffem beschrieben. Die Bewegung der einzelnen Elemente und der Folienbeutel im Übergabebereich ist ebenso durch Pfeile dargestellt..

Im folgenden wird die Funktionsweise der beschriebenen Ausführungsform erläutert. Dabei wird die Arbeitsweise am Durchgang eines Folienbeutels einer Reihe durch die Behandlungsstationen beschreiben.

Durch einen nicht näher gezeigten Mechanismus, z.B. durch eine Saugvorrichtung, wird aus dem Magazin 7 ein leerer Folienbeutel von einem Transportelement 2 übernommen. Bei der beschriebenen Ausführungsform wird der Folienbeutel stehend in einem Transportelement geführt. Dabei wird er von den Elementen 2a in aufrechter Stellung gehalten. Durch die taktweise Fortbewegung der Fördereinrichtung 6 wird ein Folienbeutel zu der Öffnungsstation 8 geführt In dieser Offnungsstation 8 wird der Folienbeutel mit Hilfe eines eingeführten Röhrchens aufgeblasen. Um dieses Blasrohr einführen zu können, muß der Folienbeutel an seiner Oberkante leicht geöffnet werden. Dies wird z.B. mit einer Saugvorrichtung erreicht, die in der Figur 1 nicht gezeigt ist , und seitlich an die Oberkante der Folienbeutel angreift und diese auseinanderzieht. Der so aufgeblasene Folienbeutel wird zur Füllstation 9 weitergefördert Dort wird im allgemeinen heißes Gut, z.B. Getränk, eingefüllt Einen weiteren Arbeitstakt später befindet sich der so gefüllte Folienbeutel unterhalb der Verschließstation 10. Um die Oberkante des Folienbeutels in der Verschließstation verschweißen zu können, müssen die Oberkanten der Seitenflächen wieder zueinander geführt werden. Dies kann z.B. durch Lösen der Saugvorrichtungen geschehen, die für die Öffnung der Folienbeutel in der Öffnungsstation 8 sorgen. Sowohl die Öffnungsstation, die Füllstation als auch die Verschließstation sind in der Höhe an die verschiedenen Beutel anpaßbar. Dazu ist ein verstellbares Gestell 16 vorgesehen. Nach dem Verschließen in der Verschließstation 10 werden die Folienbeutel von der Übergabevorrichtung 11 von der ersten Fördereinrichtung 6.auf die zweite Fördereinrichtung 5 verbracht. Die Transportelemente 2 der ersten Fördereinrichtung 6 werden zur Aufnahme eines neuen Folienbeutels aus dem Magazin 7 mit Hilfe der Umlenkrollen 17 zurückgeführt.

In Figur 2 ist gezeigt, wie bei dieser Ausführungsform die Übergabevorrichtung ausgestaltet ist Die Steuerung der gesamten Übergabevorrichtung 11 mit den Antrieben der Klammem 22a, 22b, der höhenverstellbaren Elemente 21 und der Trägerelemente 20 wird dabei von einem Prozeßrechner übemommen. Die Folienbeutel 1 werden von der ersten Fördereinrichtung 6 in den Trageelementen 2 der Übergabevorrichtung 11 zugeführt. Dort greifen Klammem 22a im oberen Bereich an die Folienbeutel 1 an. Höhenverstellbare Elemente 21 ziehen den Folienbeutel nach oben, während gleichzeitig eine horizontale Bewegung der Trageelemente 20 an der Trageschiene 19 ausgelöst wird. Sowohl die vertikale Bewegung der höhenverstellbaren Elemente 21 als auch die horizontale Bewegung der Trageelemente 20 wird durch Antriebe hervorgerufen, die von der automatischen Steuerung der Übergabevorrichtung 11 geregelt werden. Dazu sind in der Figur 2 nicht explizit gezeigte Anfiebsmittel vorgesehen, z.B. Pneumatikzylinder oder Spindelgetriebe, die in an sich bekannter Weise funktionieren.

Ebenso wie in den anderen Behandlungsstationen werden auch in der Übergabevorrichtung Reihen von Folienbeuteln gleichzeitig behandelt Durch die horizontale Bewegung des Trageelementes 20 der Schiene 19 werden die Folienbeutel in den Bereich der zweiten Fördereinrichtung 5 gebracht Dort werden sie durch Absenken der höhenverstellbaren Elemente 21 in die Transportelemente 3 der zweiten Fördereinrichtung 5 abgestellt Die Kammern 22b öffnen sich und geben die Folienbeutel in die Transportelemente 3 der zweiten Fördereinrichtung 5 frei.

Die zweite Fördereinrichtung 5 bringt die gefüllten Folienbeutel 4 zu einer Ventilationskühlstation 13. Die Geschwindigkeit der zweiten Födereinrichtung 5 ist geringer als die Geschwindigkeit der ersten Fördereinrichtung 6. Um den Arbeitstakt der er sten Fördereinrichtung 6 auch an der zweiten Fördereinrichtung 5 beibehalten zu können, ist der Abstand b der einzelnen Transportelemente 3 auf der zweiten Fördereinrichtung 5 in Förderrichtung kleiner als der Abstand a der einzelnen Transportelemente 2 auf der ersten Fördereinrichtung 6. Auf diese Weise kann die geringere Geschwindigkeit der zweiten Fördereinrichtung 5 ausgeglichen werden. Da sich die Folienbeutel 4 auf der zweiten Fördereinrichtung 5 bereits in gefülltem Zustand befinden und dementsprechend ausreichend stabil sind, brauchen sie keine aufwendige Unterstützung, um sie senkrecht zu halten. Dementsprechend können die zweiten Transportelemente 3 auf der zweiten Fördereinrichtung 5 weniger aufwendig und weniger Platz beanspruchend konstruiert sein als die ersten Transportelemente 2 auf der ersten Fördereinrichtung 6. Wie in Figur 2 dargestellt, können die Transportelemente 3 der zweiten Fördereinrichtung 5 einfache wannenförmige Elemente sein.

Wiederum in Figur 1 ist erkennbar, wie die zweite Fördereinrichtung 5 die Reihen von Folienbeuteln 4 durch die Kühlstation 12 führt. Aufgrund der geringeren Geschwindigkeit der zweiten Fördereinrichtung 5 befinden sich die Folienbeutel 4 eine ausreichende Zeit im gekühlten Bereich, auch wenn die gesamte Kühlstation 12 kürzer gestaltet ist als bei Füllmaschinen des Standes der Technik.

Am Ende der Kühlstation 12 werden schließlich die Reihen der Folienbeutel von einer Entnahmestation 14 zum Weitertransport bzw. zur Verpackung in nicht weiter interessierender Weise von der zweiten Fördereinrichtung 5 entnommen.

Die erfindungsgemäße Follmaschine mit zwei separaten Fördereinrichtungen 5, 6 ermöglicht eine individuelle Steuerung der Geschwindigkeit, mit der die Folienbeutel den einzelnen Behandlungsstationen bzw. der Kühlstation zugeführt werden. Auf diese Weise läßt sich z.B. eine langsamere Geschwindigkeit im Bereich der Kühlstation realisieren, ohne daß der schnelle Arbeitstakt im Bereich der Öffnungs-, Füll- bzw. Verschließstation aufgegeben werden müßte. Da für die Kühlung eine separate Fördereinrichtung vorgesehen ist, die durch mit wesentlich einfacher gestalteten Förderelementen auskommt, ist insgesamt die in der Maschine benötigte Anzahl von komplizierten Transportelementen geringer, weil diese nur im Bereich der ersten Fördereinrichtung für die dort durchlaufenen Stationen benötigt wird.

Insgesamt läßt sich die Maschine somit bei vergleichbarer Leistung wesentlich kostengünstiger herstellen und ist letztlich auch in der Wartung weniger aufwendig als bekannte Maschinen.

## Patentansprüche

1. Füllmaschine für flexible Folienbeutel mit einer Transporteinrichtung, die eine Vielzahl von Transportelementen für die Folienbeutel umfasst, zur Zuführung der Folienbeutel zu einer Öffnungsstation, einer Füllstation, einer Verschließstation und einer Kühlstation,
**dadurch gekennzeichnet, dass**
die Transporteinrichtung eine erste Fördereinrichtung (6) mit einer Vielzahl von ersten Transportelementen (2) zur Zuführung der Folienbeutel (1) zur Öffnungsstation (8), der Füllstation (9) und der Verschließstation (10), und eine zweite Fördereinrichtung (5) mit einer Vielzahl von zweiten Transportelementen (3) zur Zuführung der Folienbeutel (4) zur Kühlstation (12) umfasst, und dass
eine Übergabestation (9) zur Übergabe der Folienbeutel (1, 4) von der ersten Fördereinrichtung (6) zu der zweiten Fördereinrichtung (5) vorgesehen ist,
wobei die ersten Transportelemente Formteile umfassen, die zum Halten der Folienbeutel in einer aufrechten Position dienen bzw. den Öffnungs- und Schließvorgang unterstützen und
die zweiten Transportelemente (3) einfache wannenförmige Aufnahmeelemente sind.

2. Füllmaschine nach Anspruch 1, **dadurch gekennzeichnet, dass** die zweite Fördereinrichtung (5) mit einer kleineren Geschwindigkeit betrieben wird als die erste Fördereinrichtung (6).

3. Füllmaschine nach Anspruch 2, **dadurch gekennzeichnet, dass** die zweiten Transportelemente (3) der zweiten Fördereinrichtung (5) eine kleinere Beabstandung (b) in Förderrichtung untereinander haben als die ersten Transportelemente (2) der ersten Fördereinrichtung (6).

4. Füllmaschine nach einem der Ansprüche 1 bis 3, **dadurch gekennzeichnet, dass** die Höhe der Öffnungsstation (8), der Füllstation (9) und der Verschließstation (10) veränderbar ist.

5. Füllmaschine nach einem der Ansprüche 1 bis 4, **gekennzeichnet durch** eine Plattform (15) im Übergabebereich von der ersten Fördereinrichtung (6) zu der zweiten Fördereinrichtung (5).

6. Füllmaschine nach einem der Ansprüche 1 bis 5, **dadurch gekennzeichnet, dass** die Übergabestation (11) höhenveränderliche und lateral verschiebbare Elemente (21) umfasst, die jeweils Klammem (22a, 22b) haltern, mit deren Hilfe die Folienbeutel (1, 4) von der ersten Fördereinrichtung (6) zur zweiten Fördereinrichtung (5) befördert werden können.

7. Füllmaschine nach Anspruch 6, **gekennzeichnet durch** eine automatische Steuerungseinheit für die Elemente der Übergabestation (11).

8. Verfahren zum Öffnen, Füllen, Verschließen und Kühlen von Folienbeuteln, **dadurch gekennzeichnet, dass** die Folienbeutel (1, 4) mit ersten Transportelementen (2) einer Öffnungsstation (8), einer Füllstation (9), einer Verschließstation (10) mit einer ersten Geschwindigkeit und einer ersten Beabstandung (a) in Förderrichtung zugeführt werden und
die Folienbeutel (1, 4) mit zweiten Transportelementen (3) einer Kühlstation (12) mit einer zweiten Geschwindigkeit und einer zweiten Beanstandung (b) in Förderrichtung zugeführt werden,
wobei die erste Beabstandung (a) größer als die zweite Beabstandung (b) ist und die erste Geschwindigkeit größer als die zweite Geschwindigkeit ist, wobei die ersten Transportelemente (2) Formteile umfassen, die zum Halten der Folienbeutel (1, 4) in einer aufrechten Position dienen bzw. den Öffnungs- und Schließvorgang unterstützen und
die zweiten Transportelemente (3) einfache wannenförmige Aufnahmeelemente sind.

## Claims

1. A filling machine for flexible sheet bags, comprising a transportation means including a plurality of transportation elements for the sheet bags, for supplying the sheet bags to an opening station, a filling station, a closing station and a cooling station,
**characterized in that**
the transportation means comprises a first conveying means (6) including a plurality of first transportation elements (2) for feeding the sheet bags (1) to the opening station (8), the filling station (9) and the closing station (10), and a second conveying means (5) including a plurality of second transportation elements (3) for feeding the sheet bags (4) to the cooling station (12), and that
a transfer station (9) is provided for transferring the sheet bags (1, 4) from the first conveying means (6) to the second conveying means (5),
the first transportation elements comprising shaped parts which serve to hold the sheet bags in an upright position and support the opening and closing operation, and
the second transportation elements (3) being simple trough-shaped receiving elements.

2. The filling machine according to claim 1,
**characterized in that**
the second conveying means (5) is operated at a lower speed than the first conveying means (6).

3. The filling machine according to claim 2,
**characterized in that**
the second transportation elements (3) of the second conveying means (5) are spaced apart from one another at a smaller spacing (b) in the conveying direction than the first transportation elements (2) of the first conveying means (6).

4. The filling machine according to any one of claims 1 to 3,
**characterized in that**
the height of the opening station (8), the filling station (9) and the closing station (10) is variable.

5. The filling machine according to any one of claims 1 to 4,
**characterized by**
a platform (15) in the transition area from the first conveying means (6) to the second conveying means (5).

6. The filling machine according to any one of claims 1 to 5,
**characterized in that**
the transfer station (11) comprises vertically adjustable and laterally displaceable elements (21) which hold respective clamps (22a, 22b) with the aid of which the sheet bags (1, 4) can be conveyed from the first conveying means (6) to the second conveying means (5).

7. The filling machine according to claim 6,
**characterized by**
an automatic control unit for the elements of the transfer station (11).

8. A method for opening, filling, closing and cooling sheet bags,
**characterized in that**
the sheet bags (1, 4) are supplied with first transportation elements (2) to an opening station (8), a filling station (9), a closing station (10) at a first speed and at a first spacing (a) in the conveying direction, and
the sheet bags (1, 4) are supplied with second transportation elements (3) to a cooling station (12) at a second speed and a second spacing (b) in the conveying direction, the first spacing (a) being greater than the second spacing (b), and the first speed being greater than the second speed, the first transportation elements (2) comprising shaped parts which serve to hold the sheet bags (1, 4) in an upright position and support the opening and closing operation, and the second transportation elements (3) being simple trough-like receiving elements.

## Revendications

1. Machine de remplissage pour poches flexibles en feuille, comportant un dispositif de transport qui comprend une pluralité d'éléments de transport pour les poches en feuille et qui sert à amener les poches en feuille jusqu'à un poste d'ouverture, un poste de remplissage, un poste de fermeture et un poste de refroidissement,
**caractérisée en ce que**
le dispositif de transport comprend un premier dispositif de convoyage (6) comportant une pluralité de premiers éléments de transport (2) servant à amener les poches en feuille (1) jusqu'au poste d'ouverture (8), au poste de remplissage (9) et au poste de fermeture (10), ainsi qu'un second dispositif de convoyage (5) comportant une pluralité de seconds éléments de transport (3) servant à amener les poches en feuille (4) jusqu'au poste de refroidissement (12), et **en ce que**
il est prévu un poste de transfert (9) servant à transférer les poches en feuille (1, 4) du premier dispositif de convoyage (6) au second dispositif de convoyage (5),
les premiers éléments de transport comprenant des pièces moulées qui servent à maintenir les poches en feuille dans une position droite et contribuent au processus d'ouverture ainsi qu'au processus de fermeture, et
les seconds éléments de transport (3) étant de simples éléments de réception en forme de cuvette.

2. Machine de remplissage selon la revendication 1, **caractérisée en ce que** l'on fait fonctionner le second dispositif de convoyage (5) à plus petite vitesse que le premier dispositif de convoyage (6).

3. Machine de remplissage selon la revendication 2, **caractérisée en ce que** les seconds éléments de transport (3) du second dispositif de convoyage (5) ont, entre eux, un plus petit écartement (b) dans la direction de convoyage que les premiers éléments de transport (2) du premier dispositif de convoyage (6).

4. Machine de remplissage selon l'une des revendications 1 à 3, **caractérisée en ce que** la hauteur du poste d'ouverture (8), du poste de remplissage (9) et du poste de fermeture (10) est modifiable.

5. Machine de remplissage selon l'une des revendications 1 à 4, **caractérisée par** une plate-forme (15) située dans la zone de transfert du premier dispositif de convoyage (6) au second dispositif de convoyage (5).

6. Machine de remplissage selon l'une des revendications 1 à 5, **caractérisée en ce que** le poste de transfert (11) comprend des éléments (21) à hauteur variable et latéralement coulissants, lesquels portent chacun des pinces (22a, 22b) à l'aide desquelles les poches en feuille (1, 4) peuvent être acheminées du premier dispositif de convoyage (6) au second dispositif de convoyage (5).

7. Machine de remplissage selon la revendication 6, **caractérisée par** une unité de commande automatique destinée aux éléments du poste de transfert (11).

8. Procédé d'ouverture, de remplissage, de fermeture et de refroidissement de poches en feuille, **caractérisé en ce que** les poches en feuille (1, 4) sont amenées, avec les premiers éléments de transport (2), jusqu'à un poste d'ouverture (8), un poste de remplissage (9), et un poste de fermeture (10) en ayant une première vitesse et un premier écartement (a) dans la direction de convoyage, et **en ce que**
les poches en feuille (1, 4) sont amenées, avec les seconds éléments de transport (3), à un poste de refroidissement (12) en ayant une deuxième vitesse et un deuxième écartement (b) dans la direction de convoyage,
le premier écartement (a) étant supérieur au deuxième écartement (b) et la première vitesse supérieure à la deuxième vitesse, les premiers éléments de transport comprenant (2) des pièces moulées qui servent à maintenir les poches en feuille (1, 4) dans une position droite et contribuent au processus d'ouverture et au processus de fermeture, et
les seconds éléments de transport (3) étant de simples éléments de réception en forme de cuvette.
